Europäisches Patentamt

European Patent Office

Office européen des brevets

(11) Veröffentlichungsnummer: **0 280 939**

**A2**

(12) **EUROPÄISCHE PATENTANMELDUNG**

(21) Anmeldenummer: 88101985.5

(22) Anmeldetag: 11.02.88

(30) Priorität: 06.03.87 DE 3707208

(43) Veröffentlichungstag der Anmeldung:
07.09.88 Patentblatt 88/36

(84) Benannte Vertragsstaaten:
CH DE FR IT LI

(51) Int. Cl.⁴: **B01D 35/12**

(71) Anmelder: **Kappler, Manfred**
**Friedrich-Dietz-Strasse 16**
**D-7516 Karlsbad-Ittersbach(DE)**

(72) Erfinder: **Kappler, Manfred**
**Friedrich-Dietz-Strasse 16**
**D-7516 Karlsbad-Ittersbach(DE)**

(74) Vertreter: **Trappenberg, Hans**
**Postfach 1909**
**D-7500 Karlsruhe 1(DE)**

(54) **Verfahren und Vorrichtung zum Betreiben einer Filtereinrichtung.**

(57) Im Schneidflüssigkeits-Kreislauf von abspanenden Werkzeugmaschinen müssen, um das Ansaugen von Feinspänen zu vermeiden, im Rücklaufbehälter Filter vorgesehen sein. An diese Filter lagern sich oberflächig Feinstspäne (Schwimmspäne) an, die zu Maschinen-Ausfallzeiten führen.

Um diese Ausfallzeiten zu vermeiden, wird nach der Erfindung vorgeschlagen, zwei Filter (zwei Filtergruppen) einzusetzen, durch die wechselseitig angesaugt wird.

Fig. 1

## Verfahren und Vorrichtung zum Betreiben einer Filtereinrichtung

Die Erfindung betrifft ein Verfahren zum Betreiben einer bei abspanenden Werkzeugmaschinen, insbesondere bei Drehautomaten, vorgesehenen, in den Rücklaufbehälter eines Schneidflüssigkeits-Kreislauf eingefügten Filtereinrichtung, sowie eine Vorrichtung zur Durchführung des Verfahrens.

Bei abspanenden Werkzeugmaschinen muß die Bearbeitungsstelle durch Schneidflüssigkeit beaufschlagt werden, wobei die Schneidflüssigkeit sowohl die Werkzeugschneide kühlen, wie auch die Spanelemente schmieren und die abgetrennten Späne fortspülen soll. Durch das Kühlen wird eine erhöhte Standzeit der Werkzeuge erreicht, durch das Schmieren der Spanelemente eine Verbesserung der Ober flächengestalt und durch das Fortspülen der Späne eine gleichbleibende Schneidleistung. Die Schneidflüssigkeit wird hierbei im Kreislauf geführt, wobei die in einem Rücklaufbehälter befindliche Schneidflüssigkeit über einen im Behälter angeordneten Filter mittels einer Schneidflüssigkeits-Pumpe angesaugt und der Bearbeitungsstelle zugeführt wird und von dort wieder in den Rücklaufbehälter zurückläuft. In diesem Rücklaufbehälter sammeln sich auch die von der Bearbeitungsstelle nach unten fallenden Späne, die selbstverständlich nicht in den Schneidflüssigkeits-Kreislauf gelangen dürfen. Sie werden zurückgehalten durch den in den Rücklaufbehälter eingefügten Filter, der nicht nur die Grobspäne, sondern auch Feinspäne zurückhält. Eine besondere Sorte von feinen Spänen, die als Schwimmspäne bezeichnet werden, da sie durch Anhaften von Luftmolekülen tatsächlich in der Schneidflüssigkeit schwimmen, können sich allerdings so an der Filter-Außenseite festsetzen, daß sich der freie Filterquerschnitt nach und nach so verringert, daß eine einwandfreie Förderleistung durch die Schneidflüssigkeits-Pumpe nicht mehr gewährleistet ist. In einem solchen Falle muß die Werkzeugmaschine abgeschaltet und der Filter gereinigt oder durch einen neuen Filter ersetzt werden. Diese Ausfallzeiten fallen ganz besonders bei Drehautomaten ins Gewicht, die nach Möglichkeit im 24-Stundenbetrieb arbeiten sollen.

Die Erfindung hat sich die Aufgabe gestellt, diese Ausfallzeiten durch eine besondere Filtereinrichtung beziehungsweise durch den besonderen Betrieb einer solchen Filtereinrichtung zu vermeiden. Erreicht wird dies nach dem erfindungsgemäßen Verfahren dadurch, daß die Filtereinrichtung mindestens zwei Filter oder Filtergruppen aufweist, über die wechselseitig die Schneidflüssigkeit angesaugt wird und daß der jeweils ruhende Filter beziehungsweise die jeweils ruhende Filtergruppe durch Rütteln und/oder Rückspülen gereinigt wird.

Nicht mehr also wie bisher muß die Werkzeugmaschine stillgesetzt und müssen die Filter gereinigt oder ausgetauscht werden, sondern es werden zwei Filter beziehungsweise Filtergruppen vorgesehen, durch die wechselseitig angesaugt wird, wobei der ruhende Filter, an Ort und Stelle verbleibend, gereinigt wird. Die Werkzeugmaschine kann daher kontinuierlich durchlaufen, da stets die Versorgung mit Schneidflüssigkeit gesichert ist.

Das Reinigen der Filter könnte manuell erfolgen. Dies würde jedoch eine stete Überwachung der Werkzeugmaschine beziehungsweise des Drehautomaten bedingen. Überraschenderweise hat sich gezeigt, daß bereits durch das Ruhen des Filters, verursacht durch die Vibrationen der Werkzeugmaschine, die Filteroberfläche gesäubert wird, da sich die anhaftenden Schwimmspäne, der Schwerkraft folgend, nach unten absetzen. Sollten die stets bestehenden Vibrationen der Werkzeugmaschine nicht zu diesem Absetzen genügen, können auch Vibratoren an den Filtern beziehungsweise am Rücklaufbehälter angebracht werden. Dadurch ist auf jeden Fall eine automatische Reinigung der Filter gewährleistet. Eine weitere Möglichkeit besteht darin, die Filter durch Rückspülen von den anhaftenden Spänen zu befreien. Hierzu werden die beiden Filter über ein 4/2-Wegeventil einerseits mit der Schneidflüssigkeitspumpe und andererseits mit einem Druckflüssigkeits-oder Druckluft-Anschluß verbunden. Beim Umschalten dieses Ventils wird dann nicht nur ein Filter aus dem Schneidflüssigkeits-Kreislauf herausgenommen, sondern auch gleichzeitig mit Druckflüssigkeit oder Druckluft beaufschlagt, die im Rückstrom durch den Filter geführt wird und hierbei die anhaftenden Späne wegspült.

Das Umschalten der Ventile erfolgt hierbei zweckmäßigerweise durch einen Elektromagneten, der wiederum durch eine Zeitschaltung, je nach Späneanfall, betätigt wird.

Auf der Zeichnung sind Ausführungsbeispiele der Erfindung schematisch dargestellt, und zwar zeigen:

Fig. 1 die Anschaltung zweier Filter an die Schneidflüssigkeits-Pumpe über ein 3/2-Wegeventil und

Fig. 2 die gleiche Anschaltung über ein 4/2-Wegeventil.

In einem Rücklaufbehälter (1) befindliche Schneidflüssigkeit wird über Filter (2, 3) und ein Ventil (4, 14) mittels einer Pumpe (5) angesaugt und der Bearbeitungsstelle (Pfeil 6) zugeführt. Die Ventile (4, 14) werden durch Elektromagnete (7) über eine Zeitschaltung betätigt.

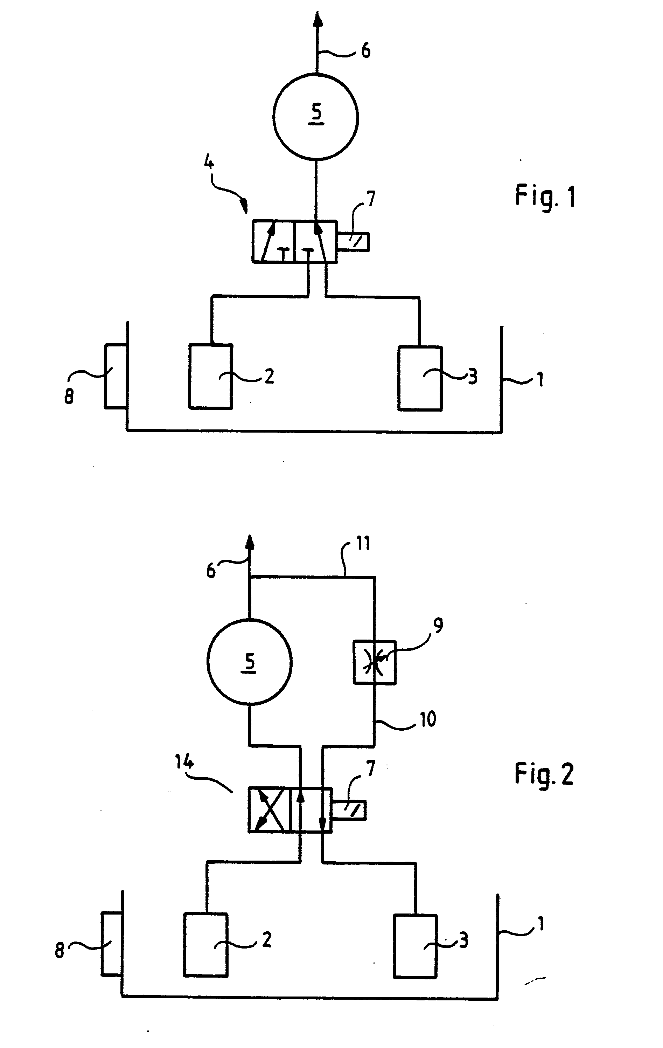

In Fig. 1 ist als Ventil (4) ein 3/2-Wegeventil vorgesehen. In der gezeichneten Lage wird Schneidflüssigkeit über den Filter (3) angesaugt und der Bearbeitungsstelle zugeführt. Der Filter (2) ist in Ruhe, so daß durch die Vibration der Werkzeugmaschine oder durch zusätzliche Vibrationen die durch Vibratoren (8), die am Filter (2, 3) oder am Rücklaufbehälter (1) angebracht sind, erzeugt werden, die anhaftenden Schwimmspäne nach unten, der Schwerkraft folgend, abfallen. Nach Betätigen des 3/2-Wegeventils (4) über den Elektromagneten (7) wird, wie dargestellt, der Kreislauf umgeschaltet, so daß nun mehr Schneidflüssigkeit über den Filter (2) angesaugt wird, während sich der Filter (3) in Ruhe befindet und sich die dort anhaftenden Späne absetzen können.

Bei der Anordnung nach Fig. 2 werden die Filter (2, 3) durch einen Rückstrom von anhaftenden Spänen freigespült. Hierzu ist ein 4/2-Wegeventil (14) vorgesehen, das ebenfalls wieder in Zeitintervallen durch einen Elektromagneten (7) betätigt wird. Als Druckflüssigkeitsanschluß ist hier ein Abzweig von der Druckseite der Pumpe (5) vorgesehen, der über eine einstellbare Drossel (9) Druckflüssigkeit zum jeweils ruhenden Filter (2, 3) führt.

## Ansprüche

1. Verfahren zum Betreiben einer bei abspanenden Werkzeugmaschinen, insbesondere bei Drehautomaten, vorgesehenen, in den Rücklaufbehälter eines Schneidflüssigkeits-Kreislaufs eingefügten Filtereinrichtung, dadurch gekennzeichnet, daß die Filtereinrichtung mindestens zwei Filter (2, 3) oder Filtergruppen (2, 3) aufweist, über die wechselseitig die Schneidflüssigkeit angesaugt wird und daß der jeweils ruhende Filter (2, 3) (Filtergruppe 2, 3) durch Rütteln und/oder Rückspülen gereinigt wird.

2. Vorrichtung zur Durchführung des Verfahrens nach Anspruch 1, dadurch gekennzeichnet, daß die beiden Filter (2, 3) (Filtergruppen 2, 3) über ein 3/2-Wegeventil (4) mit der Schneidflüssigkeitspumpe (5) verbunden sind.

3. Vorrichtung zur Durchführung des Verfahrens nach Anspruch 1, dadurch gekennzeichnet, daß die beiden Filter (2, 3) (Filtergruppen 2, 3) über ein 4/2-Wegeventil einerseits mit der Schneidflüssigkeitspumpe (5) und andererseits mit einem Druckflüssigkeitsanschluß (10) oder Druckluft-Anschluß verbunden sind.

4. Vorrichtung nach Anspruch 3, dadurch gekennzeichnet, daß der Druckflüssigkeitsanschluß (10) ein gedrosselter Abzweig (11) von der Druckseite der Schneidflüssigkeitspumpe (5) ist.

5. Vorrichtung nach den Ansprüchen 2 bis 4, dadurch gekennzeichnet, daß das 3/2-beziehungsweise 4/2-Wegeventil (4, 14) mit einem Betätigungs-Elektromagneten 7) verbunden ist.

6. Vorrichtung zur Durchführung des Verfahrens nach Anspruch 1, dadurch gekennzeichnet, daß an den beiden Filtern (2, 3) (Filtergruppen 2, 3) und/oder am Rücklaufbehälter (1) Vibratoren (8) angebracht sind.

0 280 939

Fig. 1

Fig. 2